# EUROPEAN PATENT SPECIFICATION

(11) **EP 1 222 418 B1**
(45) Date of publication and mention of the grant of the patent: **21.09.2011**
(21) Application number: 00969613.9
(22) Date of filing: 19.10.2000
(51) Int. Cl.: F16L 21/00, F16L 47/06

(54) **CONNECTION PIECE**
VERBINDUNGSSTÜCK
PIECE DE CONNEXION

(30) Priority: 20.10.1999 FI 992274
(43) Date of publication of application: 17.07.2002
(73) Proprietor: Uponor Innovation AB, 730 61 Virsbo (SE)
(72) Inventor: JUUTI, Rauno, FIN-15540 Villähde (FI)
(74) Representative: Huhtanen, Ossi Jaakko
(86) International application number: PCT/FI2000/000912
(87) International publication number: WO 2001/029477

(56) References cited:
- EP-A1- 0 066 825
- EP-A2- 0 743 482
- SE-B- 406 633
- SE-B- 407 452
- US-A- 5 851 036

## Description

The invention relates to a connection piece comprising a body and at least one sealing element, the body and the sealing element being formed as a substantially integral piece and the body being capable of enduring, as such, mechanical strain subjected to it.

Pipes are typically connected by using connections where a separate sealing is provided between the pipe to be connected and the connection piece. The connection piece may comprise a groove for the sealing. The connection in question therefore consists of various parts, which makes it rather awkward and unreliable. For example, a mechanic must have enough skill to ensure that the sealing is mounted to a correct position. In addition, it is fairly insecure whether the sealing will stay in place.

Publications GB 2,291,153 and EP 0,413,494 disclose a connection piece which comprises sealing elements, the connection piece and the sealing elements being formed as an integral piece by means of injection moulding, for example. The sealing elements are formed on the outside of the normal cylinder surface of the connection piece. This, however, causes a fairly large clearance between the connection piece and the pipe, and the connection is therefore not necessarily tight enough. Furthermore, the solution in question reduces the cross-section of flow at the connection.

US Patent 5,851,036 describes a connection piece provided with two recess areas. At the recess areas a clearance is to be formed between the connection piece and the pipe. Cement is fed into the clearance formed by the recess areas, the cement attaching the connection piece to the pipe. Between the recess areas and at each end of them there are seals which prevent the cement from flowing out of the recess area. The connection is fairly complicated and laborious to implement and it requires the cement. The sealing flaps disclosed in the publication are thin and long, and therefore they easily bend between the connection piece and the pipe, thereby increasing the clearance between the connection piece and the pipe.

DE publication 2,738,108 discloses a sleeve collar acting as a connection piece. At the connection, the diameter of the sleeve collar is made larger than in the rest of the pipe and sealing elements are arranged inside the sleeve collar. Due to the inner sealing elements there is a fairly large clearance between the sleeve collar and the pipe to be connected. Furthermore, a support ring must be arranged at one end of the sleeve collar to ensure that the pipe to be connected remains straight inside the connection.

EP-A1-0 066 825 discloses a rubber sealing to be used together with a metal clamp. The metal clamp and the rubber sealing are together used for connecting the ends of two pipes.

An object of the present invention is to provide a simple and reliable connection piece.

The connection piece of the invention is characterized by the features of claim 1.

An essential idea of the invention is that the connection piece is provided with one or more sealing elements, the body of the connection piece and the sealing elements being made as an integral piece, and that the sealing elements are arranged at the sealing area, the wall of the connection piece being made thinner at the sealing area than in the rest of the connection piece, whereby the sealing elements are in a recess so as to minimize the clearance between the connection piece and the counter part to be attached to the connection piece. A preferred embodiment is based on the idea that the distance of the outermost sealing element from the edge of the sealing area is such that a bent sealing element cannot extend outside the sealing area, between the connection piece and the counter part to be fastened to it. A second preferred embodiment is based on the idea that a plural number of sealing elements are arranged into the sealing area, the sealing elements being most advantageously of different heights. A third preferred embodiment is based on the idea that support ribs are arranged between the sealing elements in the sealing area. A fourth preferred embodiment is based on the idea that the sealing element is arranged to taper towards the top. A fifth preferred embodiment is based on the idea that the sealing elements are oblique.

An advantage of the invention is that an extremely small clearance can be provided between the connection piece and the counter part to be attached to the connection piece. The connection piece is simple, reliable and easy to manufacture and to use. The sealing elements to be arranged into the recess can be fairly long, thus allowing even a low mounting force to bend the elements. The bending of the sealing elements, in turn, fairly effectively locks the connection piece and the counter part to be fixed to it. The sealing elements do not need to be very thin; hence, the connection piece is easy to manufacture, and it will not be damaged during mounting. In addition, the connection piece allows a fairly large cross-sectional surface at the connection. The use of sealing elements of different heights ensures that at least one sealing element seals the connection extremely well. The support ribs arranged between the sealing elements strengthen the construction of the connection piece at the thinned wall. Sealing elements which taper towards the top are economical to manufacture and they facilitate the mounting. Since the sealing elements are oblique, they do not have to bend essentially during the mounting, whereby the surface of the sealing elements remains substantially even and smooth.

The invention will be described in greater detail with reference to the accompanying drawings, in which
Figure 1 is a schematic side view of a connection piece of the invention;
Figure 2 is a sectional side view of a wall of the connection piece of Figure 1 arranged to a counter piece;
Figure 3 is a schematic sectional side view of a wall of a second connection piece not in accordance with the invention;
Figure 4 is a schematic sectional side view of a wall of a third connection piece not in accordance with the invention;
Figure 5 is a schematic sectional side view of a wall of a fourth connection piece of the invention mounted to a counter piece;
Figure 6 is a schematic sectional side view of a wall of a fifth connection piece of the invention;
Figure 7 is a schematic sectional side view of a wall of a sixth connection piece of the invention;
Figure 8 is a schematic front view of a connection piece of Figure 7; and
Figure 9 is a schematic front view of a connection piece of the invention.

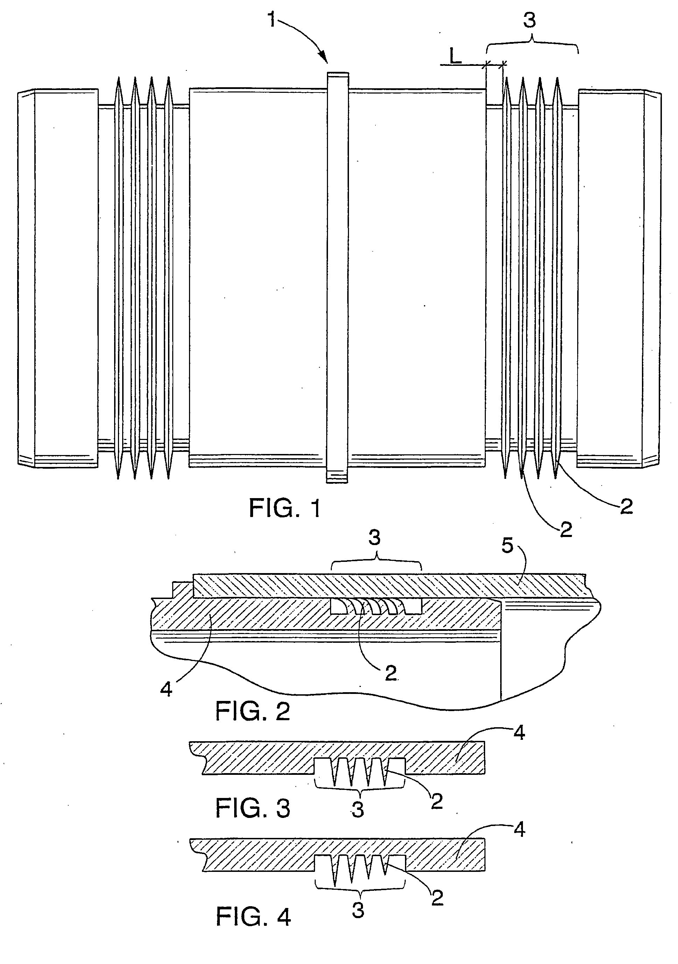

Figure 1 illustrates a connection piece 1. At both ends of the connection piece 1 there are sealing elements 2 annularly arranged around the connection piece 1 which can then be used for example for connecting two pipes together. The connection piece 1 is made of a plastic material, such as polyethylene PE, crosslinked polyethylene PEX or polypropylene PP, by applying injection moulding. The injection mould is formed in such a way that at the same time with the moulding, sealing elements 2 are also formed, whereby an integral piece comprising the sealing elements 2 and the body of the connection piece 1 is formed, the body enduring, as such, mechanical strain subjected to it, i.e. no separate additional part or structure is needed to support or reinforce the body of the connection piece 1. The sealing elements 2 are most preferably of the same material as the rest of the connection piece, which renders the connection piece 1 easy to manufacture. On the other hand, if the body of the connection piece 1 is made of a hard material, and the sealing elements 2 are nevertheless to be made as flexible as possible, a process known as integral moulding is used. The sealing elements can then be made of a material that is softer than the rest of the connection piece 1, such as thermoplastic elastomer, polyvinyl chloride PVC or polyurethane PUR. In integral moulding, the different materials are fed at different stages in a manner known per se.

The sealing elements 2 are arranged into a sealing area 3. At the sealing area 3, a wall 4 is made thinner, in a manner shown particularly in Figure 2, compared with the wall in the rest of the connection piece 1. The sealing elements in the sealing area 3 are arranged into a recess, thus allowing the clearance between the connection piece 1 and a counter piece 5 arranged onto the connection piece to be made as small as possible. The side of the wall 4 of the connection piece 1 facing away from the sealing elements is substantially straight, the inner diameter of the connection thereby being as large as possible and its outer diameter as small as possible. Consequently, the connection is fairly small in size, but, at the same time, also flow resistance inside the connection is very small. The counter piece 5 can be for example a plastic pipe, such as a sewage pipe or an air-conditioning duct, or a well element, or the like. The connection piece shown in Figure 1 is circular, i.e. it is meant to be used in connection with a circular counter piece 5.

Further, since the wall of the connection piece 1 is thinned at the sealing area 3, the sealing elements 2 can be relatively high and therefore they can be made fairly flexible. The sealing elements 2 are higher than the recess in the sealing area 3, and therefore they bend when the connection piece 1 is fitted to the counter piece 5. The bending sealing elements engage the connection piece 1 and the counter piece 5 extremely tightly together. The sealing elements can, however, be considerably thick. Most preferably they taper upwards, i.e. away from the connection piece 1, because then they bend best at the top, and the counter piece 5 can be relatively easily fitted onto the connection piece 1. In addition, sealing elements 2 tapering towards the top are the easiest to manufacture. However, the sealing elements 2 can be made fairly thick, a typical thickness at the middle of the height of an element being over 0.20 mm. This ensures that the injection mould is filled substantially entirely also at the sealing elements 2.

A distance L of the outermost sealing element from the edge of the sealing area 3 is most advantageously arranged to be so long that even when bent, the sealing element 2 does not extend onto the connection piece 1 outside the sealing area 3, i.e. between the counter piece 5 and the wall 4 of the connection piece. The distance between the sealing elements can be shorter than the distance L in question, because even if bent sealing elements settled onto each other, they would yield downward. In other words, the clearance between the connection piece 2 and the counter piece 5 would not increase significantly.

Figure 3 shows a wall 4 of an unclaimed connection piece 1 where the sealing elements 2 are arranged inside the connection piece 1. To provide the connection, the counter piece 5 is in this case arranged inside the connection piece 1. A sealing area 3 inside the connection piece 1 and the inner sealing elements 2 such as these can be manufactured using for example an apparatus which has collapsible cores in the inside. The described solution can thus be implemented by applying the technique described for example in EP Patent 0,473,801.

Figure 4 shows sealing elements 2 which are arranged inside the unclaimed connection piece 1 similarly as in Figure 3. Further, in the solution according to Figure 4 the sealing elements 2 are of different heights, the first sealing element being the shortest and the last one the longest. This ensures that the connection is sufficiently tight at least at one of the sealing elements 2. Even if the clearance between the connection piece 1 and the counter piece 5 were fairly large, the longest sealing element would provide sufficient sealing. On the other hand, if the sealing element in some cases is too high and the surface of the counter piece 5 bends the sealing element 2 to a horizontal position, the sealing is impaired because the top of the sealing element 2 collapses to a sine curve form, for example. In such cases it is the shorter sealing element that seals the connection better; hence it is advantageous that the sealing elements 2 are of different heights, because then the top of at least one sealing element 2 is at an optimal height position. Moreover, at the sealing area 3 the thickness of the wall may vary such that the bottom of the sealing area 3 is oblique. If the sealing elements 2 are equally high, the tops of the elements are at different height positions. By making the sealing elements different in height, it is possible to arrange the tops of the sealing elements 2 at the same position of height also when the bottom is oblique.

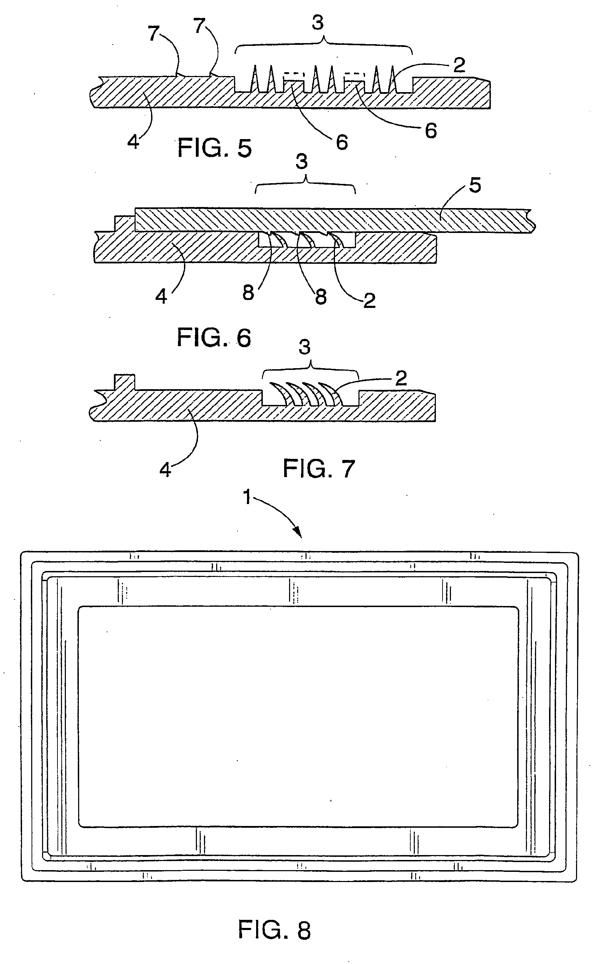

Figure 5 illustrates a solution where the sealing area 3 is provided with support ribs 6 annularly arranged around the connection piece 1 and between the sealing elements 2. The support ribs 6 strengthen the construction of the connection piece 1 at the sealing area 3 where the wall 4 of the connection piece 1 is thinner than the rest of the wall. The support ribs 6 are preferably so low that they allow the sealing element 2 to bend onto the support rib 6 without thereby increasing the clearance between the counter piece 5 and the connection piece 1. The height of the support rib 6 is thus preferably smaller than the height of the recess in the sealing area 3. The support rib does not necessarily have to extend annularly around the connection piece 1, but it may be formed of a series of protrusions arranged on the circumference of the connection piece 1. The height of the protrusions is then typically higher than the height of the recess in the sealing area 3, as shown with a dashed line in Figure 6. Separate protrusions such as these provide means assisting in the centring of the connection piece 1 and the counter piece 5, thus reducing the side pressure of the connection piece 1, i.e. a situation where the connection piece 1 would be pressed tightly against the counter piece 5 at one side in such a way that a bigger clearance, or even a gap, would be formed on the opposite side.

Figure 5 further shows that the connection piece 1 is provided with locking barbs 7. The locking barbs 7 do not necessarily need to continue round the entire connection piece 1. The locking barbs 7 allow the memory in the material of the counter piece 5 to be utilized. For example, the counter piece 5 can be slightly expanded in such a way that the counter piece 5 remembers the narrower state. The counter piece 5 is then pushed onto the connection piece 1 and the locking barb or locking barbs 7 lock the counter piece 5 and the connection piece 1 together. The counter piece 1 then tends to return to the state defined in its memory and thereby locks onto the connection piece extremely tightly.

Figure 6 shows a solution where the counter piece 5, such as a well element, is provided with counter teeth. The counter teeth can be provided by forming notches 8, for example. The notches 8 do not necessarily have to continue round the entire counter piece 5. The counter teeth on the counter piece 5 can also be produced for example by forming triangular grooves annularly round the counter piece 5. When the connection piece 1 and the counter piece 5 are pushed one onto the other, the sealing elements 2 lock into the counter teeth, whereby the connection endures tension extremely well. This type of connection is particularly useful for example when well elements are joined together to form a well. In other words, the connection piece 1 of the invention 1 can be used for forming a well by providing the well elements with the connection piece of the invention 1 and by joining the well elements together in the vertical direction. The connection formed between the well elements is tight and endures tension. The counter teeth can be formed to the counter piece 5 by using a mandrel, for example.

Figure 7 illustrates a connection piece with oblique sealing elements. In this case the sealing elements 2 do not need to essentially bend when the connection piece 1 and the counter piece 5 are fixed one onto the other. Therefore there is no essential change in the surface of the sealing elements 2 caused by bending, and the surface does not become uneven but remains smooth. Again, the connection piece of Figure 7 is advantageously manufactured by applying the technique disclosed in EP Patent 0,473,801 which makes use of collapsible cores.

Figure 8 shows the connection piece 1 of Figure 7 in front view. The connection piece in Figure 8 is square, and therefore it can be applied to square air-conditioning ducts, for example. A problem with square air-conditioning ducts is that the pipe collapses or gives way fairly easily. The extremely rigid structure of the connection piece of the invention allows a square connection piece to support square air-conditioning ducts reasonably well.

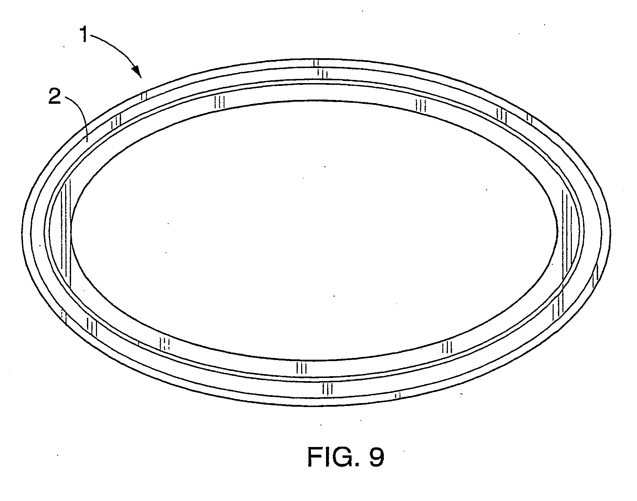

Figure 9 shows a connection piece 1 in front view. The connection piece of Figure 9 is oval and therefore it is meant to be used together with oval counter pieces 5.

The drawings and the related specification are only meant to illustrate the idea of the invention. The details of the invention may vary within the scope of the claims. The connection piece of the invention is therefore applicable to air-conditioning systems and rain water sewage systems. In general, the connection piece of the invention is particularly well applicable when tightness against air, cold water or sand is required. Furthermore, when the connection piece 1 is used for example in connection with a spiral air-conditioning duct or an otherwise uneven pipe, the parts between the sealing elements 2 can be filled with silicone mass or a two-component glue to make the connection tight and endurable.

## Claims

1. A connection piece comprising a body and at least one sealing element (2), the body and the sealing element (2) being formed as a substantially integral piece and the body being made of plastic such that it is capable of enduring, as such, mechanical strain when subjected to it, **characterized in that** the connection piece (1) further comprises a sealing area (3), a wall (4) of the connection piece (1) being made thinner at the sealing area (3) than the rest of the connection piece (1), the sealing element (2) thus being arranged into a recess in the sealing area (3), and the length of the sealing element (2) being greater than the height of the recess and that the sealing area (3) and the sealing element (2) are arranged only on the outside of the connection piece (1).

2. A connection piece according to claim 1, **characterized in that** the side of the wall (4) of the connection piece (1) facing away from the sealing element (2) is substantially straight.

3. A connection piece according to claim 1 or 2, **characterized in that** the sealing element (2) is at a distance (L) from the edge of the sealing area (3), the distance being so long that even when bent, the sealing element (2) cannot extend outside the sealing area (3) onto the connection piece (1).

4. A connection piece according to any one of the preceding claims, **characterized in that** the connection piece (1) comprises at least two sealing elements (2).

5. A connection piece according to claim 4, **characterized in that** the tops of the sealing elements (2) are at different positions of height.

6. A connection piece according to any one of the preceding claims, **characterized in that** the sealing area (3) is provided with at least one support rib (6).

7. A connection piece according to claim 6, **characterized in that** the height of the support rib (6) is smaller than the height of the recess in the sealing area (3).

8. A connection piece according to claim 6, **characterized in that** the height of the support rib (6) is greater than the height of the recess in the sealing area (3).

9. A connection piece according to any one of the preceding claims, **characterized in that** the sealing element (2) is arranged to taper towards the top.

10. A connection piece according to any one of the preceding claims, **characterized in that** the sealing element (2) is made oblique.

11. A connection piece according to any one of the preceding claims, **characterized in that** the middle part of the sealing element (2) is more than 0.20 mm thick.

12. A connection piece according to any one of the preceding claims, **characterized in that** the body of the connection piece (1) and the sealing element (2) are made of the same material.

13. A connection piece according to any one of claims 1 to 11, **characterized in that** the body of the connection piece (1) and the sealing element (2) are made of a different material.

14. A connection piece according to claim 13, **characterized in that** the material of the sealing element (2) is softer than the body of the connection piece (1).

15. A connection piece according to any one of the preceding claims, **characterized in that** the connection piece (1) is angular.

16. A connection piece according to any one of the preceding claims, **characterized in that** the connection piece (1) is arranged to be used with air-conditioning ducts.

17. A connection piece according to any one of claims 1 to 15. **characterized in that** the connection piece (1) is arranged to be used with sewage pipes.

18. A connection piece according to any one of claims 1 to 15, **characterized in that** the connection piece (1) is arranged to be used with well elements, i.e. to connect well elements together in a vertical direction to form a well.

19. A connection piece according to any one of the preceding claims, **characterized in that** the connection piece (1) comprises locking barbs (7).

20. A connection piece according to any one of the preceding claims, in combination with a counter piece (5) **characterized in that** the connection piece (1) is arranged to be used with a counter piece (5) provided inter teeth.

21. A connection piece according to any one of the preceding claims, **characterized in that** the connection piece (1) is made by injection moulding.

## Patentansprüche

1. Verbindungsstück, enthaltend einen Körper und wenigstens ein Dichtungselement (2), wobei der Körper und das Dichtungselement (2) als im wesentlichen integrales Stück ausgebildet sind und der Körper aus Kunststoff besteht, so dass er in der Lage ist als solches einer mechanischen Beanspruchung standzuhalten, wenn er dieser ausgesetzt ist, **dadurch gekennzeichnet, dass** das Verbindungsstück (1) weiterhin eine Dichtungsfläche (3) enthält, wobei eine Wand (4) des Verbindungsstückes (1) an der Dichtungsfläche (3) dünner ausgebildet ist als der Rest des Verbindungsstückes (1), das Dichtungselement (2) somit in einer Ausnehmung in der Dichtungsfläche (3) angeordnet ist und die Länge des Dichtungselementes (2) größer ist als die Höhe der Ausnehmung, und dass die Dichtungsfläche (3) sowie das Dichtungselement (2) lediglich auf der Außenseite des Verbindungsstückes (1) angeordnet sind.

2. Verbindungsstück nach Anspruch 1, **dadurch gekennzeichnet, dass** die Seite der Wand (4) des Verbindungsstückes (1), die dem Dichtungselement (2) abgewandt ist, im wesentlichen gerade ist.

3. Verbindungsstück nach Anspruch 1 oder 2, **dadurch gekennzeichnet, dass** das Dichtungselement (2) in einem Abstand (L) von dem Rand der Dichtungsfläche (3) angeordnet ist, wobei der Abstand so lang ist, dass sich, selbst wenn es gebogen ist, das Dichtungselement (2) nicht aus der Dichtungsfläche (3) auf das Verbindungsstück (1) erstrecken kann.

4. Verbindungsstück nach einem der vorhergehenden Ansprüche, **dadurch gekennzeichnet, dass** das Verbindungsstück (1) wenigstens zwei Dichtungselemente (2) enthält.

5. Verbindungsstück nach Anspruch 4, **dadurch gekennzeichnet, dass** sich die Oberseiten der Dichtungselemente (2) in unterschiedlichen Höhenpositionen befinden.

6. Verbindungsstück nach einem der vorhergehenden Ansprüche, **dadurch gekennzeichnet, dass** die Dichtungsfläche (3) mit wenigstens einer Stützrippe (6) versehen ist.

7. Verbindungsstück nach Anspruch 6, **dadurch gekennzeichnet, dass** die Höhe der Stützrippe (6) kleiner ist als die Höhe der Ausnehmung in der Dichtungsfläche (3).

8. Verbindungsstück nach Anspruch 6, **dadurch gekennzeichnet, dass** die Höhe der Stützrippe (6) größer als die Höhe der Ausnehmung in der Dichtungsfläche (3) ist.

9. Verbindungsstück nach einem der vorhergehenden Ansprüche, **dadurch gekennzeichnet, dass** das Dichtungselement (2) dazu eingerichtet ist, sich hin zur Oberseite zu verjüngen.

10. Verbindungsstück nach einem der vorhergehenden Ansprüche, **dadurch gekennzeichnet, dass** das Dichtungselement (2) schräg ausgebildet ist.

11. Verbindungsstück nach einem der vorhergehenden Ansprüche, **dadurch gekennzeichnet, dass** der mittlere Teil des Dichtungselementes (2) mehr als 0,20 mm dick ist.

12. Verbindungsstück nach einem der vorhergehenden Ansprüche, **dadurch gekennzeichnet, dass** der Körper des Verbindungsstücks (1) und das Dichtungselement (2) aus demselben Material bestehen.

13. Verbindungsstück nach einem der Ansprüche 1 bis 11, **dadurch gekennzeichnet, dass** der Körper des Verbindungsstückes (1) und das Dichtungselement (2) aus einem unterschiedlichen Material bestehen.

14. Verbindungsstück nach Anspruch 13, **dadurch gekennzeichnet, dass** das Material des Dichtungselementes (2) weicher ist als der Körper des Verbindungsstückes (1).

15. Verbindungsstück nach einem der vorhergehenden Ansprüche, **dadurch gekennzeichnet, dass** das Verbindungsstück (1) winkelförmig ist.

16. Verbindungsstück nach einem der vorhergehenden Ansprüche, **dadurch gekennzeichnet, dass** das Verbindungsstück (1) dazu eingerichtet ist, mit Klimaanlagenleitungen verwendet zu werden.

17. Verbindungsstück nach einem der Ansprüche 1 bis 15, **dadurch gekennzeichnet, dass** das Verbindungsstück (1) dazu eingerichtet ist, mit Kanalrohren verwendet zu werden.

18. Verbindungsstück nach einem der Ansprüche 1 bis 15, **dadurch gekennzeichnet, dass** das Verbindungsstück (1) dazu eingerichtet ist, mit Schachtelementen verwendet zu werden, d.h. die Schachtelemente in vertikaler Richtung miteinander zu verbinden, um einen Schacht auszubilden.

19. Verbindungsstück nach einem der vorhergehenden Ansprüche, **dadurch gekennzeichnet, dass** das Verbindungsstück (1) Verriegelungswiderhaken (7) enthält.

20. Verbindungsstück nach einem der vorhergehenden Ansprüche in Verbindung mit einem Gegenstück (5), **dadurch gekennzeichnet, dass** das Verbindungsstück (1) dazu eingerichtet ist, mit einem Gegenstück (5) verwendet zu werden, das mit einem Gegenzahn versehen ist.

21. Verbindungsstück nach einem der vorhergehenden Ansprüche, **dadurch gekennzeichnet, dass** das Verbindungsstück (1) durch Spritzgießen ausgebildet ist.

## Revendications

1. Pièce de raccordement comprenant un corps et au moins un élément d'étanchéité (2), le corps et l'élément étanchéité (2) étant formés comme une pièce sensiblement solidaire et le corps étant réalisé à partir de plastique, de sorte qu'il est capable d'endurer ainsi, une contrainte mécanique lorsqu'il y est soumis, **caractérisée en ce que** la pièce de raccordement (1) comprend en outre une zone d'étanchéité (3), une paroi (4) de la pièce de raccordement (1) étant plus fine au niveau de la zone d'étanchéité (3) qu'au niveau du reste de la partie de raccordement (1), l'élément d'étanchéité (2) étant ainsi agencé dans un évidement dans la zone d'étanchéité (3), et la longueur de l'élément d'étanchéité (2) étant supérieure à la hauteur de l'évidement et **en ce que** la zone d'étanchéité (3) et l'élément d'étanchéité (2) sont agencés uniquement sur l'extérieur de la pièce de raccordement (1).

2. Pièce de raccordement selon la revendication 1, **caractérisée en ce que** le côté de la paroi (4) de la pièce de raccordement (1) faisant face à distance à l'élément d'étanchéité (2), est sensiblement droit.

3. Pièce de raccordement selon la revendication 1 ou 2, **caractérisée en ce que** l'élément d'étanchéité (2) est à une distance (L) du bord de la zone d'étanchéité (3), la distance étant si longue que même lorsqu'elle est courbée, l'élément d'étanchéité (2) ne peut pas s'étendre à l'extérieur de la zone d'étanchéité (3) sur la pièce de raccordement (1).

4. Pièce de raccordement selon l'une quelconque des revendications précédentes, **caractérisée en ce que** la pièce de raccordement (1) comprend au moins deux éléments d'étanchéité (2).

5. Pièce de raccordement selon la revendication 4, **caractérisée en ce que** les parties supérieures des éléments d'étanchéité (2) sont à des positions en hauteur différentes.

6. Pièce de raccordement selon l'une quelconque des revendications précédentes, **caractérisée en ce que** la zone d'étanchéité (3) est prévue avec au moins une nervure de support (6).

7. Pièce de raccordement selon la revendication 6, **caractérisée en ce que** la hauteur de la nervure de support (6) est plus petite que la hauteur de l'évidement dans la zone d'étanchéité (3).

8. Pièce de raccordement selon la revendication 6, **caractérisée en ce que** la hauteur de la nervure de support (6) est supérieure à la hauteur de l'évidement dans la zone d'étanchéité (3).

9. Pièce de raccordement selon l'une quelconque des revendications précédentes, **caractérisée en ce que** l'élément d'étanchéité (2) est agencé pour se rétrécir progressivement vers la partie supérieure.

10. Pièce de raccordement selon l'une quelconque des revendications précédentes, **caractérisée en ce que** l'élément d'étanchéité (2) est oblique.

11. Pièce de raccordement selon l'une quelconque des revendications précédentes, **caractérisée en ce que** la partie centrale de l'élément d'étanchéité (2) a une épaisseur supérieure à 0,20 mm.

12. Pièce de raccordement selon l'une quelconque des revendications précédentes, **caractérisée en ce que** le corps de la pièce de raccordement (1) et l'élément d'étanchéité (2) sont réalisés avec le même matériau.

13. Pièce de raccordement selon l'une quelconque des revendications 1 à 11, **caractérisée en ce que** le corps de la pièce de raccordement (1) et l'élément d'étanchéité (2) sont réalisés avec un matériau différent.

14. Pièce de raccordement selon la revendication 13, **caractérisée en ce que** le matériau de l'élément d'étanchéité (2) est plus souple que le corps de la pièce de raccordement (1).

15. Pièce de raccordement selon l'une quelconque des revendications précédentes, **caractérisée en ce que** la pièce de raccordement (1) est angulaire.

16. Pièce de raccordement selon l'une quelconque des revendications précédentes, **caractérisée en ce que** la pièce de raccordement (1) est agencée pour être utilisée avec des conduits de conditionnement d'air.

17. Pièce de raccordement selon l'une quelconque des revendications 1 à 15, **caractérisée en ce que** la pièce de raccordement (1) est agencée pour être utilisée avec des tuyaux d'égout.

18. Pièce de raccordement selon l'une quelconque des revendications 1 à 15, **caractérisée en ce que** la pièce de raccordement (1) est agencée pour être utilisée avec des éléments de puits, c'est-à-dire pour raccorder des éléments de puits ensemble dans une direction verticale afin de former un puits.

19. Pièce de raccordement selon l'une quelconque des revendications précédentes, **caractérisée en ce que** la pièce de raccordement (1) comprend des ardillons de blocage (7).

20. Pièce de raccordement selon l'une quelconque des revendications précédentes, en combinaison avec une contre-pièce (5), **caractérisée en ce que** la pièce de raccordement (1) est agencée pour être utilisée avec une contre-pièce (5) prévue avec des contre-dents.

21. Pièce de raccordement selon l'une quelconque des revendications précédentes, **caractérisée en ce que** la pièce de raccordement (1) est réalisée par moulage par injection.
